# EUROPÄISCHE PATENTSCHRIFT

(11) **EP 1 714 841 B1**
(45) Veröffentlichungstag und Bekanntmachung des Hinweises auf die Patenterteilung: **22.04.2009**
(21) Anmeldenummer: 06006725.3
(22) Anmeldetag: 30.03.2006
(51) Int. Cl.: B60R 21/231, B60R 21/26

(54) **Gassackmodul**
Airbag module
Module d'airbag

(30) Priorität: 20.04.2005 DE 202005006330 U
(43) Veröffentlichungstag der Anmeldung: 25.10.2006
(73) Patentinhaber: TRW Automotive Safety Systems GmbH, 63743 Aschaffenburg (DE)
(72) Erfinder: Fellhauer, Joachim, 63741 Nilkheim (DE); Keutz, Markus, 64380 Rossdorf (DE); Kreuzer, Martin, 63839 Kleinwallstadt (DE); Lehmann, Michael, 63739 Aschaffenburg (DE); Magoley, Marcus, Dr., 63739 Aschaffenburg (DE); Schneider, Michael, Dr., 63834 Sulzbach (DE)
(74) Vertreter: Prinz & Partner

(56) Entgegenhaltungen:
- EP-A1- 1 426 245
- EP-A2- 1 155 924
- US-A1- 2005 057 030

## Beschreibung

Die Erfindung betrifft ein Gassackmodul mit einem Gassack, der eine Vorderwand aufweist, die im aufgeblasenen Zustand des Gassacks einem Insassen zugewandt ist. An der Vorderwand greift ein erstes Ende eines zerstörbaren Halteelements an, wobei das Halteelement eine ungehinderte Bewegung der Vorderwand beim Aufblasen des Gassacks wenigstens teilweise verhindert. Ferner weist das Gassackmodul einen Gasgenerator zur Befüllung des Gassacks auf, wobei der Gasgenerator einen ersten Ausströmabschnitt zum Durchtritt einer ersten Gasmenge hat.

Derartige Gassackmodule sind aus dem Stand der Technik bekannt. Sie bieten den Vorteil, daß der Gassack, vom Insassen aus gesehen, anstatt einer großen Tiefe zunächst eine große Aufprallfläche bereitstellt. Die große Aufprallfläche gewährleistet in vielen Sitzpositionen des Insassen sehr gute Rückhaltebedingungen. Außerdem wird die Vorderwand, die sich auf den Insassen zu bewegt, von dem Halteelement frühzeitig abgebremst.

Bei besonders hohen Fahrzeuggeschwindigkeiten oder besonders schweren Insassen ist es jedoch möglich, daß die bereitgestellte Eintauchtiefe erhöht werden soll. Es gab daher bereits Überlegungen, das Halteelement im Laufe des Aufblasvorgangs zu zerstören, damit der Gassack eine größere Tiefe ausbildet und somit der Eintauchweg für einen Insassen länger wird. Es sind mehrere passive und aktive Möglichkeiten zum Lösen oder Zerstören des Halteelements bekannt.

So kann das Halteelement beispielsweise eine Sollbruchstelle aufweisen, an der das Halteelement abhängig von einem Gassackinnendruck reißt. Solche passiven Lösungen über Sollbruchstellen, Reißnähte etc. sind in hohem Maße toleranzbehaftet. Die Toleranzen entstehen zum einen bei der Herstellung der Sollbruchstellen oder Reißnähte selbst, zum anderen aber auch durch Toleranzen beim Gasausstoß der Gasgeneratoren. Die andere Möglichkeit, das Halteelement zu lösen oder zu zerstören sind aktive Systeme, bei denen Schneideinrichtungen oder Befestigungsbolzen des Halteelements bewegt werden. Diese Systeme benötigen einen zusätzlichen Aktor und sind damit kompliziert und teuer.

In der EP 1 426 245 A1 ist ein Gassackmodul dargestellt, mit einem Fangbandsystem, das den Gassack an einer freien Entfaltung hindert, wobei wenigstens ein Fangband durch einen Aktuatormechanismus freigegeben werden kann. Für den Aktuatormechanismus sind zahlreiche Ausführungsvarianten angegeben, wobei unter anderem die Möglichkeit erwähnt ist, heißes Generatorgas für die Freigabe eines Fangbands zu nutzen. Die Freigabe des Fangbands ist in diesem Fall unmittelbar an den Aufblasvorgang des Gassacks gekoppelt und findet bei jeder Aktivierung des Gassackmoduls statt. Lediglich der genaue Freigabezeitpunkt kann beispielsinreise über eine Materialstärke des Fangbands eingestellt werden.

Die gattungsbildende EP 1 155 924 A2 offenbart sowohl aktive wie auch passive Möglichkeiten, das Halteelement zu lösen oder zu zerstören. U.a. ist eine Ausführungsform gezeigt, bei der sich ein Fangband durch einen Diffusor erstreckt, vorbei an den Ausströmöffnungen eines Gasgenerators. Bei einer Aktivierung des Gasgenerators strömt heißes Gas auf das Fangband, welches dadurch abschnittsweise zerstört wird. Der Nachteil ist dabei, daß die Zerstörung des Fangbandes auch in dieser Schift unmittelbar an den Aufblasvorgang des Gassacks gekoppelt ist.

Aufgabe der vorliegenden Erfindung ist es nun, eine Zerstörung eines Gassackhalteelements zeitlich steuerbar und zuverlässig herbeizuführen.

Hierfür ist bei einem Gassackmodul der eingangs genannten Art vorgesehen, daß der Gasgenerator einen separaten, zweiten Ausströmabschnitt hat, der wahlweise unabhängig vom Freisetzen oder zeitverzögert zum Freisetzen der ersten Gasmenge von einer zweiten Gasmenge durchströmt werden kann, wobei die zweite Gasmenge Heißgas ist, welches über den zweiten Ausströmabschnitt zum Halteelement strömt, um eine Zerstörung des Halteelements herbeizuführen. In derzeit gebräuchlichen Heißgasgeneratoren erreicht das aus dem Gasgenerator freigesetzte Gas sehr hohe Temperaturen. Durch die Anströmung eines Halteelements ist bei diesen Temperaturen eine zuverlässige, schnelle und wenig toleranzbehaftete Zerstörung des Halteelements im angeströmten Bereich gewährleistet. Darüber hinaus strömt das Heißgas über einen Ausströmabschnitt zum Halteelement, der unter verschiedenen vorbestimmbaren Bedingungen und damit wahlweise freigegeben werden kann. Damit ist der Zeitpunkt der Zerstörung des Halteelements ebenfalls vorbestimmbar.

In bevorzugten Ausführungsformen ist das Halteelement ein schmelzbares Fangband. Durch nicht-brennbares aber schmelzbares Material ist die wenigstens abschnittsweise Zerstörung des Halteelements mit Heißgas besonders schnell und risikolos erreichbar.

Am zweiten Ausströmabschnitt des Gasgenerators kann eine Gasleiteinrichtung vorgesehen sein. Diese Gasleiteinrichtung sorgt dafür, daß das ausströmende Heißgas konzentriert auf das Halteelement strömt und somit eine besonders schnelle Zerstörung des Halteelements herbeiführt.

Vorzugsweise ist ein zweites Ende des Haltelements unmittelbar am zweiten Ausströmabschnitt des Gasgenerators befestigt. Somit muß keine Gasleiteinrichtung vorgesehen sein, da das Halteelement bei einer Durchströmung des zweiten Ausströmabschnitts sowieso von Heißgas angeströmt wird.

In einer besonders bevorzugten Ausführungsform ist der Gasgenerator ein mehrstufiger Gasgenerator mit einer separat zündbaren Heißgasstufe, welche die zweite Gasmenge freisetzt. Dies ist besonders vorteilhaft, da der zweite Ausströmabschnitt sehr einfach einer Gasgeneratorstufe zugewiesen werden kann und nur bei Zündung dieser Stufe von Heißgas durchströmt wird.

Dabei ist in dieser Ausführungsform eine Aktivierung der Zündeinrichtung der Heißgasstufe mittels einer sensorabhängigen Steuerung möglich. In dieser Ausführung wird dann parameterabhängig entschieden, ob und wann das Halteelement gelöst wird und eine zusätzliche Gasmenge in den Gassack einströmt.

In einer weiteren Ausführungsform ist der zweite Ausströmabschnitt von einer Abdeckung verschlossen, die so bewegt werden kann, daß sie den zweiten Ausströmabschnitt freigibt. In dieser Ausführungsform kann ein einstufiger Gasgenerator eingesetzt werden, wobei allerdings passive Auslösemittel, wie z.B. ein Zugband, oder aktive Auslösemittel, wie ein pyrotechnischer Antrieb, nötig sind, um die Abdeckung sensorabhängig zu bewegen.

In einer weiteren Ausführungsform weist der Gasgenerator eine Zündeinrichtung auf, die eine erste Brennstoffmenge zündet, um die erste Gasmenge freizusetzen, und wobei eine zweite Brennstoffmenge durch Überzünden aktiviert wird, um die zweite Gasmenge zu erzeugen. Damit ist ein gewisser Zeitversatz zwischen dem Beginn der Gassackentfaltung und dem Beginn der wenigstens abschnittsweisen Zerstörung des Halteelements gewährleistet.

Bei dieser Ausführung kann zusätzlich ein Überzündverzögerer vorgesehen sein, der den Zeitversatz zwischen der Zündung der ersten Brennstoffmenge und der Zündung der zweiten Brennstoffmenge festlegt. Über diesen Verzögerer ist eine zeitliche Optimierung des Gassackentfaltungsvorgangs möglich.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen schematischen Schnitt durch eine erste Ausführungsform des erfindungsgemäßes Gassackmoduls;
Figur 2 eine schematische Darstellung eines Gasgenerators für das erfindungsgemäße Gassackmodul gemäß einer zweiten Ausführungsform; und
Figur 3 einen schematischen Schnitt durch ein erfindungsgemäßes Gassackmodul gemäß einer dritten Ausführungsform.

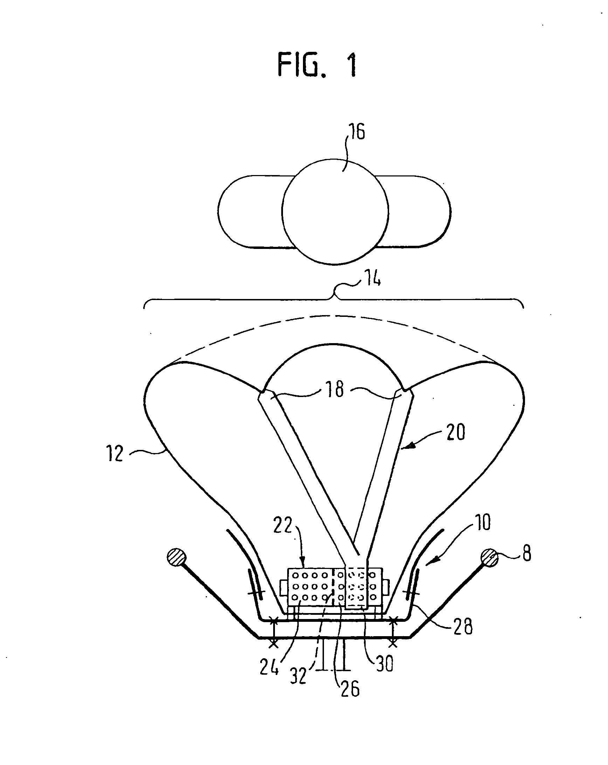

Die Figur 1 ist ein Schnitt durch ein Lenkrad 8 mit einem Gassackmodul 10, wobei das Gassackmodul 10 auch an anderen Stellen im Fahrzeuginnenraum, beispielsweise im Beifahrerbereich angeordnet sein kann. Das Gassackmodul 10 weist einen Gassack 12 mit einer Vorderwand 14 auf, die im aufgeblasenen Zustand des Gassacks einem Insassen 16 zugewandt ist und an der ein erstes Ende 18 eines zerstörbaren Halteelements 20 angreift, wobei das Halteelement 20 eine ungehinderte Bewegung der Vorderwand 14 beim Aufblasen des Gassacks 12 wenigstens teilweise verhindert. Ein Gasgenerator 22 zur Befüllung des Gassacks 12 weist einen ersten Ausströmabschnitt 24 zum Durchtritt einer ersten Gasmenge und einen separaten, zweiten Ausströmabschnitt 26 auf, der wahlweise unabhängig vom Freisetzen oder zeitverzögert zum Freisetzen der ersten Gasmenge von einer zweiten Gasmenge durchströmt wird, wobei die zweite Gasmenge Heißgas ist, welches über den zweiten Ausströmabschnitt 26 zum Halteelement 20 strömt, um eine Zerstörung des Halteelements 20 herbeizuführen.

Der Gasgenerator 22 ist in der Figur 1 als mehrstufiger Rohrgasgenerator ausgebildet. Er ist durch eine Wand 32 in eine erste Kammer mit dem ersten Ausströmabschnitt 24 und eine zweite Kammer mit dem zweiten Ausströmabschnitt 26 unterteilt. Die erste Stufe des Gasgenerators ist eine Kaltgas- oder Heißgasstufe, bei deren Aktivierung Gas aus der ersten Kammer ausströmt und den Gassack 12 in eine erste Entfaltungsstellung, wie in Figur 1 gezeigt, bringt. Die zweite Stufe ist eine separat zündbare Heißgasstufe, wobei aus der zweiten Kammer über den zweiten Ausströmabschnitt 26 Heißgas in den Gassack 12 ausströmt.

Eine Zündeinrichtung, welche die Heißgasstufe zur Freisetzung der zweiten Gasmenge aktiviert, ist vorzugsweise sensorabhängig gesteuert. Damit kann eine Zerstörung des Halteelements 20 nur bei Bedarf, also beispielsweise bei hohen Fahrzeuggeschwindigkeiten oder schweren Fahrzeuginsassen ausgelöst werden.

In der Figur 1 ist der Gassack 12 bereits aus einem Modulgehäuse 28 ausgetreten und befindet sich in der ersten Entfaltungsstellung (als durchgezogene Linie dargestellt), in der die Vorderwand 14 des Gassacks 12 von einem ersten Ende 18 des Halteelements 20 zurückgehalten wird.

Das Haltelement 20 ist in diesem Fall ein schmelzbares Fangband, beispielsweise aus einem nicht-hitzeschutzbeschichteten Gassackgewebe. Das erste Ende 18 ist längs des Fangbands geteilt, so daß das Fangband die Vorderwand 14 an zwei Punkten zurückhält. Ein zweites Ende 30 des Halteelements 20 liegt unmittelbar am zweiten Ausströmabschnitt 26 des Gasgenerators 22 an. Bei einem schmelzbaren Fangband ist dies besonders einfach durch ein Umwickeln des Gasgenerators 22 mit dem zweiten Ende 30 des Fangbands möglich. Alternativ kann das zweite Ende 30 jedoch auch am Modulgehäuse 28 befestigt sein.

Beim Ausströmen des Heißgases über den zweiten Ausströmabschnitt 26 wird das Halteelement 20 an seinem zweiten Ende 30, also unmittelbar dort, wo es an den Gasgenerator 22 angrenzt, abschnittsweise geschmolzen. Aufgrund des Schmelzens und der Zugkraft infolge des Gassackinnendrucks verliert das Halteelement 20 seine Rückhaltewirkung für die Vorderwand 14, so daß der Gassack 12 eine zweite Entfaltungsstellung einnimmt (als gestrichelte Linie dargestellt). Besonders vorteilhaft ist die zweite Gasmenge so bemessen, daß das einströmende Heißgas, welches eine Zerstörung des Halteelements 20 herbeiführt, für einen annähernd konstanten Gassackinnendruck sorgt. Dafür muß die zweite Gasmenge etwa dem Volumenunterschied des Gassacks zwischen der ersten, rückgehaltenen Entfaltungsstellung und der zweiten, vollkommenen Entfaltungsstellung entsprechen.

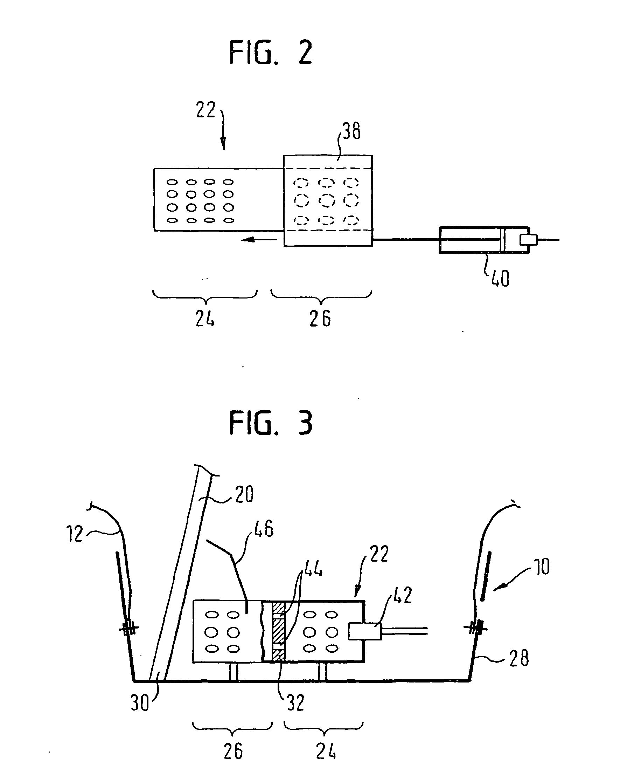

Die Figur 2 zeigt einen Gasgenerators 22 gemäß einer zweiten Ausführungsform des Gassackmoduls. Der zweite Ausströmabschnitt 26 ist von einer Abdeckung 38 verschlossen, die so bewegt werden kann, daß sie den zweiten Ausströmabschnitt 26 freigibt. Der erste Ausströmabschnitt 24 wird von der Bewegung der Abdeckung 38 nicht beeinflußt, oder er kann infolge der Bewegung ganz oder teilweise durch die Abdeckung 38 verschlossen werden. Im dargestellten Beispiel ist die Abdeckung 38 eine Hülse, die den Gasgenerator 22 umgibt und in Richtung des ersten Ausströmabschnitts bewegt werden kann.

In dieser Ausführungsform ist somit der Einsatz eines kostengünstigen, einstufigen Gasgenerators 22 möglich. Allerdings muß eine Auslösevorrichtung 40 vorgesehen sein, welche die Abdeckung 38 bewegt. Die Auslösevorrichtung 40 kann dabei passiv oder aktiv ausgeführt sein. Eine passive Auslösevorrichtung ist beispielsweise ein Zugband, dessen eines Ende mit der Vorderwand 14 des Gassacks 12 gekoppelt ist und dessen zweites Ende mit der Abdeckung 38 gekoppelt ist, so daß die Abdeckung 38 abhängig vom Entfaltungszustand des Gassacks 12 bewegt wird. In Figur 2 ist eine pyrotechnisch betriebene Kolben-/Zylindereinheit als Beispiel für eine aktive Auslösevorrichtung dargestellt. Dies bedeutet zwar einen erhöhten Aufwand infolge eines zusätzlich notwendigen Zündkreises, ermöglicht dafür jedoch eine unabhängige Freigabe des Halteelements 20.

In einer dritten Ausführungsform des Gassackmoduls gemäß Figur 3 weist der Gasgenerator 22 eine Zündeinrichtung 42 auf, die eine erste Brennstoffmenge zündet, welche die erste Gasmenge freisetzt. Eine zweite Brennstoffmenge zur Freisetzung der zweiten Gasmenge wird durch Überzünden aktiviert. Hierfür ist in die Wand 32 des Gasgenerators 22 eine Überzündeinrichtung 44 integriert. Durch den Einsatz eines Verzögerers kann der Überzündvorgang zeitlich gesteuert werden, so daß sich der Gassack 12 optimal entfaltet.

Zur zielgerichteten Strahlführung der zweiten Gasmenge auf das Halteelement 20 ist in Figur 3 eine Gasleiteinrichtung in Form eines Blechs 46 am zweiten Ausströmabschnitt 26 des Gasgenerators 22 vorgesehen.

## Patentansprüche

1. Gassackmodul (10) mit
einem Gassack (12), der eine Vorderwand (14) aufweist, die im aufgeblasenen Zustand des Gassacks (12) einem Insassen (16) zugewandt ist und an der ein erstes Ende (18) eines zerstörbaren Halteelements (20) angreift, welches eine ungehinderte Bewegung der Vorderwand (14) beim Aufblasen des Gassacks (12) wenigstens teilweise verhindert, und
einem Gasgenerator (22) zur Befüllung des Gassacks (12) mit einem ersten Ausströmabschnitt (24) zum Durchtritt einer ersten Gasmenge,
**dadurch gekennzeichnet, daß** der Gasgenerator (22) einen separaten, zweiten Ausströmabschnitt (26) hat, der wahlweise unabhängig vom Freisetzen oder zeitverzögert zum Freisetzen der ernsten Gasmenge von einer zweiten Gasmenge durchströmt werden kann, wobei die zweite Gasmenge Heißgas ist, welches über den zweiten Ausströmabschnitt (26) zum Halteelement (20) strömt, um eine Zerstörung des Halteelements (20) herbeizuführen.

2. Gassackmodul (10) nach Anspruch 1, **dadurch gekennzeichnet, daß** das Halteelement (20) ein schmelzbares Fangband ist.

3. Gassackmodul (10) nach einem der vorhergehenden Ansprüche, **dadurch gekennzeichnet, daß** eine Gasleiteinrichtung am zweiten Ausströmabschnitt (26) des Gasgenerators (22) vorgesehen ist.

4. Gassackmodul (10) nach einem der vorhergehenden Ansprüche, **dadurch gekennzeichnet, daß** ein zweites Ende (30) des Halteelements (20) unmittelbar am zweiten Ausströmabschnitt (26) des Gasgenerators (22) befestigt ist.

5. Gassackmodul (10) nach einem der vorhergehenden Ansprüche, **dadurch gekennzeichnet, daß** der Gasgenerator (22) ein mehrstufiger Gasgenerator mit einer separat zündbaren Heißgasstufe ist, welche die zweite Gasmenge freisetzt.

6. Gassackmodul (10) nach Anspruch 5, **dadurch gekennzeichnet, daß** eine Zündeinrichtung der Heißgasstufe mittels einer sensorabhängigen Steuerung aktivierbar ist.

7. Gassackmodul (10) nach einem der Ansprüche 1-4, **dadurch gekennzeichnet, daß** der zweite Ausströmabschnitt (26) von einer Abdeckung (38) verschlossen ist, die so bewegt werden kann, daß sie den zweiten Ausströmabschnitt (26) freigibt.

8. Gassackmodul (10) nach einem der Ansprüche 1-4, **dadurch gekennzeichnet, daß** der Gasgenerator (22) eine Zündeinrichtung (42) aufweist, die eine erste Brennstoffmenge zündet, um die erste Gasmenge freizusetzen, und daß eine zweite Brennstoffmenge durch Überzünden aktiviert wird, um die zweite Gasmenge zu erzeugen.

9. Gassackmodul (10) nach Anspruch 8, **dadurch gekennzeichnet, daß** ein Überzündverzögerer vorgesehen ist, der den Zeitversatz zwischen der Zündung der ersten Brennstoffmenge und der Zündung der zweiten Brennstoffmenge festlegt.

## Claims

1. A gas bag module (10) comprising
a gas bag (12) having a front wall (14) which in the inflated state of the gas bag (12) faces an occupant (16) and which is engaged by a first end (18) of a destructible retaining element (20) which at least partially prevents an unhindered motion of the front wall (14) when the gas bag (12) is inflated, and
a gas generator (22) for filling the gas bag (12), having a first discharge section (24) for the passage of a first quantity of gas,
**characterized in that** the gas generator (22) has a separate, second discharge section (26) which can have a second quantity of gas flow through it in a way that is selectively independent of the release of the first quantity of gas or time-delayed with respect to the release thereof, the second quantity of gas being hot gas which flows to the retaining element (20) through the second discharge section (26) so as to cause a destruction of the retaining element (20).

2. The gas bag module (10) as recited in claim 1, **characterized in that** the retaining element (20) is a meltable catch strap.

3. The gas bag module (10) as recited in either of the preceding claims, **characterized in that** a gas guiding means is provided on the second discharge section (26) of the gas generator (22).

4. The gas bag module (10) as recited in any of the preceding claims, **characterized in that** a second end (30) of the retaining element (20) is attached directly to the second discharge section (26) of the gas generator (22).

5. The gas bag module (10) as recited in any of the preceding claims, **characterized in that** the gas generator (22) is a multi-stage gas generator having a separately ignitable hot-gas stage which releases the second quantity of gas.

6. The gas bag module (10) as recited in claim 5, **characterized in that** an ignition device of the hot-gas stage can be activated by means of a sensor-dependent control unit.

7. The gas bag module (10) as recited in any of claims 1-4, **characterized in that** the second discharge section (26) is closed off by a cover (38) that can be moved such that it releases the second discharge section (26).

8. The gas bag module (10) as recited in any of claims 1-4, **characterized in that** the gas generator (22) has an ignition device (42) which ignites a first quantity of fuel in order to release the first quantity of gas, and that a second quantity of fuel is activated by ignition transfer in order to produce the second quantity of gas.

9. The gas bag module (10) as recited in claim 8, **characterized in that** an ignition transfer retarder is provided that sets the time delay between the ignition of the first quantity of fuel and the ignition of the second quantity of fuel.

## Revendications

1. Module de coussin à gaz (10), comportant
un coussin à gaz (12), qui présente une paroi antérieure (14) qui, à l'état gonflé du coussin à gaz (12), est tournée vers un occupant (16) et qui est attaquée par une première extrémité (18) d'un élément de retenue (20) destructible qui empêche au moins partiellement un mouvement sans entrave de la paroi antérieure (14) lors du gonflage du coussin à gaz (12), et
un générateur de gaz (22) pour remplir le coussin à gaz (12) avec un premier tronçon de décharge (24) pour laisser passer une première quantité de gaz,
**caractérisé en ce que** le générateur de gaz (22) a un deuxième tronçon de décharge (24) qui, sélectivement indépendamment de ou avec retard par rapport à la libération de la première quantité de gaz ou peut être traversé par une deuxième quantité de gaz, la deuxième quantité de gaz étant du gaz chaud qui s'écoule vers l'élément de retenue (20) via le deuxième tronçon de décharge (26) pour provoquer une destruction de l'élément de retenue (20).

2. Module de coussin à gaz (10) selon la revendication 1, **caractérisé en ce que** l'élément de retenue (20) est une bande de garde fusible

3. Module de coussin à gaz (10) selon l'une des revendications précédentes, **caractérisé en ce qu'**un dispositif d'introduction de gaz est prévu sur le deuxième tronçon de décharge (26) du générateur de gaz (22).

4. Module de coussin à gaz (10) selon l'une des revendications précédentes, **caractérisé en ce qu'**une deuxième extrémité (30) de l'élément de retenue (20) est fixée directement sur le deuxième tronçon de décharge (26) du générateur de gaz (22).

5. Module de coussin à gaz (10) selon l'une des revendications précédentes, **caractérisé en ce que** le générateur de gaz (22) est un générateur de gaz à plusieurs étages avec un étage de gaz chaud susceptible d'être allumé séparément, lequel libère la deuxième quantité de gaz.

6. Module de coussin à gaz (10) selon la revendication 5, **caractérisé en ce qu'**un dispositif d'allumage de l'étage de gaz chaud peut être activé au moyen d'une commande dépendant d'un capteur.

7. Module de coussin à gaz (10) selon l'une des revendications 1 à 4, **caractérisé en ce que** le deuxième tronçon de décharge (26) est fermé par un recouvrement (38) qui peut être déplacé de telle sorte qu'il libère le deuxième tronçon de décharge (26).

8. Module de coussin à gaz (10) selon l'une des revendications 1 à 4, **caractérisé en ce que** le générateur de gaz (22) présente un dispositif d'allumage (42) qui allume une première quantité de combustible pour libérer la première quantité de gaz, et **en ce qu'**une deuxième quantité de combustible est activée par transfert d'allumage pour engendrer la deuxième quantité de gaz.

9. Module de coussin à gaz (10) selon la revendication 8, **caractérisé en ce qu'**il est prévu un retardateur de transfert d'allumage qui détermine le décalage de temps entre l'allumage de la première quantité de combustible et l'allumage de la deuxième quantité de combustible.
